# EUROPEAN PATENT APPLICATION

(11) **EP 1 760 364 A2**
(43) Date of publication of application: **07.03.2007**
(21) Application number: 05019138.6
(22) Date of filing: 02.09.2005
(51) Int. Cl.: F16H 7/08

(54) **Inner ratchet chain tensioner**

(71) Applicant: Daido Kogyo Co., Ltd., Kaga-shi Ishikawa, 922-8686 (JP)
(72) Inventor: Yamada, Akira c/o DAIDO KOGYO CO., LTD., Kaga-shi, Ishikawa, 922-8686 (JP)
(74) Representative: Vossius & Partner

(57) **Abstract**

In order to provide a plunger retraction preventing mechanism and to reduce the outside dimension of a housing, an inner ratchet chain tensioner includes a housing (1) in which a cylinder (1 a) is formed, a cylindrical plunger (2) having a bottom and slidable in the cylinder by oil pressure, a flanged cylindrical body (3) erecting from a bottom of the cylinder and on an outer periphery of which the plunger is slidably fitted, a return spring (4) contained in the flanged cylindrical body to urge the plunger in a protruding direction, and a ratchet mechanism to prevent retraction of the plunger, and the ratchet mechanism includes a register ring containing groove (18) formed on an inner peripheral part of the plunger, plural circumferential grooves (21) formed at constant intervals on an outer periphery of a tube part of the flanged cylindrical body, and a register ring (24) fitted between the register ring containing groove and the circumferential groove.

## Description

The present invention relates to a hydraulic chain tensioner to prevent looseness of a gearing chain.

In the case where a chain constructed of plural links connected to each other is stretched over a sprocket and transmits motive power, a coupling part of each of the links is worn down and elongation occurs. In a roller chain exposed to the outside and stretched so as to drive a rear wheel of a motorcycle, it is possible to deal with the elongation by adjusting the position of the sprocket. However, in the case of, for example, a timing chain used in the inside of an engine, a chain tensioner is attached, and fluttering of the chain caused by the elongation and excessive tensile force caused by the fluttering are prevented.

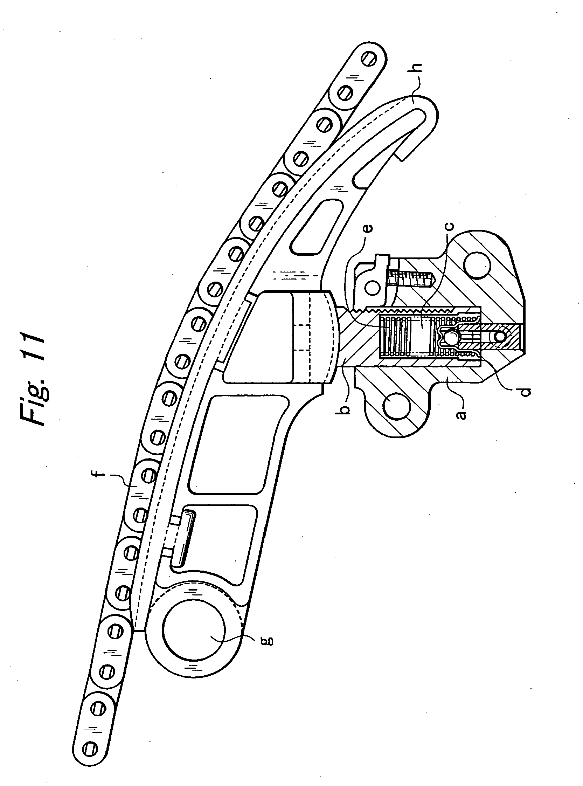

Fig. 11 shows a conventional general chain tensioner, which includes a housing "a" and a plunger "b" provided to be slidable in the housing "a". Hydraulic oil "c" is sent from the outside into an oil chamber "d" formed in the plunger "b", so that the plunger "b" protrudes in combination with a coil spring "e" incorporated in the oil chamber "d". Accordingly, a tensioner lever "h" swingable around a shaft "g" is pushed up, and a suitable tensile force is given to a loosened chain "f". On the other hand, when a large tensile force is exerted on the chain "f", a check valve is closed to prevent retraction of the plunger "b". As stated above, the chain "f" is put in such a state that a suitable tensile force is always exerted thereon.

In the conventional chain tensioner, the plunger "b" repeats the protrusion and retraction movement (vibration) to absorb the shock according to the tensile force exerted on the chain "f", and when the chain "f" is largely loosened, the plunger "b" also significantly protrudes and a ratchet is operated, and once protruding, the plunger is not retracted. The shock caused by the pulsation of the chain is supported by hydraulic pressure to support the plunger and viscous damping force of an oil film intervening between the plunger and a hole in which the plunger slides as a clearance fit. The conventional plunger "b" has a circular section, and the area of the oil film intervening on the outer peripheral surface has a large influence on the viscous damping force.

As stated above, the suitable tensile force is exerted on the loosened chain "f", and on the other hand, when the large tensile force is exerted on the chain "f", the retraction of the plunger "b" is prevented, and the chain "f" is put in the state where the suitable tensile force is always exerted thereon. Incidentally, it is necessary to provide a plunger retraction preventing mechanism so that the plunger is not retracted when an excessive tensile force is added, and in the case where this plunger retraction preventing mechanism is attached to the outside of the housing as shown in Fig. 11, the size of the whole apparatus is enlarged.

On the other hand, in the case where the plunger retraction preventing mechanism is provided inside the tensioner housing, the outer diameter of the housing becomes large. That is, it is necessary that a register ring is put, and a groove is provided to ensure its locking surface, and in the case where the register ring is put in the outer peripheral part of the plunger, a cylindrical body having a stop locking surface at its outer peripheral part is required to be inserted into the housing, and the outer diameter of the housing becomes inevitably large. In the case where a groove is directly provided in the housing, the outer diameter of the housing becomes large in order to ensure a wall thickness.

In the case where the register ring is put in the inner peripheral part of the plunger, it is possible not to increase the outer diameter of the housing. However, it is necessary to ensure an insertion space of a spring to ensure the spring force of pushing out the plunger. In the related art, since the outer diameter of the register ring is made small and is put in the inner diameter of the spring, the outer diameter of the rod having a stop groove for the register ring is also small, and a retraction preventing acceptance force is small equivalent to the strength and bearing stress. As such an inner ratchet tensioner, a chain tensioner disclosed in JP-A-2001-82558 is known.

In the chain tensioner, a plunger is slidably fitted in a cylinder chamber of a housing, a cylindrical rod guide is fitted between a check valve fitted to the bottom of the cylinder chamber and the plunger, and a flange at a tip of a rod whose rear end is inserted in the rod guide is pressed by a return spring, so that protruding properties to the outside are given to the plunger. A guide groove in which a partially cut register clip can be positioned is formed in the inner periphery of a tip part of the rod guide, a vertical end face is provided at the one end of the guide groove, and an inclined end face is formed at the other end. Plural circumferential grooves are formed on the outer periphery of the rod at equal intervals, and a second taper surface formed on the inner periphery of the circumferential groove is brought into contact with the register clip engaging with the inclined end face, so that the return amount of the plunger is restricted.

That is, in the chain tensioner as stated above, as a plunder push-out unit, a thin rod and a rod guide are provided in the inner diameter of the spring, and a register ring (register clip) is mounted between the rod and the rod guide. Since the groove having a locking surface on which the ring is locked is provided on the rod outer peripheral part and the rod guide inner peripheral part, the register ring having a small outer diameter is adopted, and there is a problem that the bearing stress of the register ring and the groove becomes high, and the stop force at the time of retraction of the plunger can not be made large.

The conventional chain tensioner has the problems as stated above. Problems to be solved by the invention are these problems, and an object of the invention is to provide an inner ratchet chain tensioner which is structured to have a plunger retraction preventing mechanism adopting a register ring and in which an outside dimension of a housing is restrained.

According to an aspect of the invention, an inner ratchet chain tensioner includes a housing in which a cylinder is formed, a cylindrical plunger having a bottom and slidable in the cylinder by oil pressure, a flanged cylindrical body erecting from a bottom of the cylinder and on an outer periphery of which the plunger is slidably fitted, a return spring contained in the flanged cylindrical body to urge the plunger in a protruding direction, and a ratchet mechanism to prevent retraction of the plunger, and the ratchet mechanism includes a register ring containing groove formed on an inner peripheral part of the plunger, plural circumferential grooves formed at constant intervals on an outer periphery of a tube part of the flanged cylindrical body, and a register ring fitted between the register ring containing groove and the circumferential groove.

By adopting the structure as stated above, at the time of protrusion of the plunger, in a state where the register ring is locked in the register ring containing groove, the ratchet mechanism allows the register ring to slide on the outer periphery of the tube part of the flanged cylindrical body so that the plunger moves upward, and when pressing force is applied to the plunger, the register ring functions to retrain the retraction of the plunger. Here, since the register ring is disposed between the inner periphery of the plunger and the outer periphery of the flanged cylindrical body, the outer diameter of the register ring can be made largest, the contact area between the register ring and the register ring containing groove becomes wide, and the restraining force at the time of retraction of the plunger becomes large.

It is preferable that the register ring containing groove has a depth larger than a wire diameter of the register ring, an upper end of an inclined surface inclined upward to a center axis, and a lower end of a perpendicular surface with respect to the center axis, and the circumferential groove of the flanged cylindrical part includes a lock groove having a circular arc surface formed at a lower side, and a taper surface formed of an inclined surface from the circular arc surface to an upper maximum diameter outer peripheral part. Incidentally, as the register ring, it is preferable to use one having a spring property and high strength, such as a piano wire. By the structure as stated above, at the time of protrusion of the plunger, the register ring is certainly locked with the lower end of the register ring containing groove, smoothly slides on the outer periphery of the tube part of the flanged cylindrical body while repeating diameter expansion and diameter contraction to move upward.

Incidentally, the depth of the groove and the wire diameter of the ring should have a margin for error. The depth of the lock groove of the outer peripheral part of the flanged cylindrical body is such that half or more of the wire diameter of the register ring fitted in the lock groove protrudes, the protruding portion is caught in the containing groove at the time of protrusion of the plunger, and a catching width by which the ring can be certainly raised must be provided. Besides, protrusion resistance force by diameter expansion of the register ring must be smaller than return spring force to push out the plunger.

A retaining ring to press and fix a flange part of the flanged cylindrical body is fitted to an outer periphery of the bottom of the cylinder, and the rising of the flanged cylindrical body can be prevented. By the structure as stated above, the assembling operation of the flanged cylindrical body becomes simple.

According to the inner ratchet chain tensioner of the invention, since the register ring is attached between the plunger inner periphery and the outer peripheral part of the flanged cylindrical body with a slight gap provided therebetween, the housing outer diameter does not become large, while the register ring diameter does not become small. Accordingly, the retraction of the plunger can be restrained by the register ring intervening between the register ring containing groove and the flanged cylindrical body.

Besides, since the flanged cylindrical body is fixed by the retaining ring fitted to the outer periphery of the bottom of the cylinder and is made to erect from the cylinder bottom, rising of the flanged cylindrical body does not occur, stability is obtained, and a position shift does not also occur.
Fig. 1 is a longitudinal sectional view showing an embodiment of an inner ratchet chain tensioner of the invention;
Fig. 2 is a plan view showing an attachment state of the inner ratchet chain tensioner;
Fig. 3 is a longitudinal sectional view showing a plunger thereof;
Fig. 4 is a sectional view showing part A of Fig. 2 in a magnified form;
Fig. 5 is a longitudinal sectional view showing a flanged cylindrical body thereof;
Fig. 6 is a sectional view seen from arrows 6, 6 of Fig. 5;
Fig. 7 is a sectional view showing part B of Fig. 5 in a magnified form;
Fig. 8 is a partial longitudinal sectional view showing the lower end part of the chain tensioner in a magnified form;
Fig. 9 is a plan view thereof;
Fig. 10 is a sectional view showing part C of Fig. 1 in a magnified form; and
Fig. 11 is a partially longitudinal sectional side view showing a use state of a conventional chain tensioner.

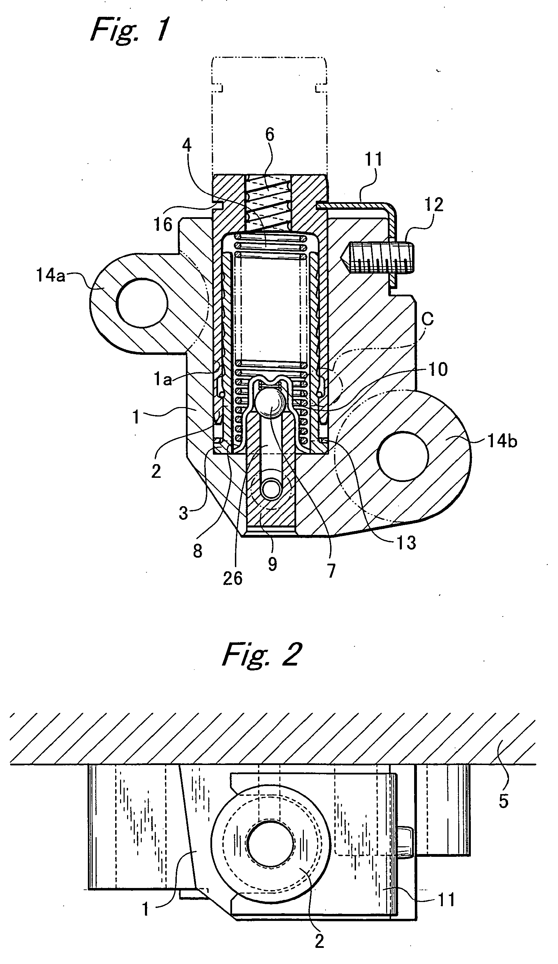

As shown in Figs. 1 and 2, an inner ratchet chain tensioner according to an embodiment of the invention includes a housing 1 as a die casting block in which a cylindrical cylinder 1a is formed, a plunger 2 contained in the cylinder 1a, a flanged cylindrical body 3 which erects from the bottom of the cylinder 1a and on the outer periphery of which the plunger 2 is slidably fitted, a return spring 4 disposed in the flanged cylindrical body 3, and a ratchet mechanism to prevent retraction of the plunger. The housing 1 includes attachment parts 14a and 14b in which attachment holes for attachment to an engine block 5 are formed.

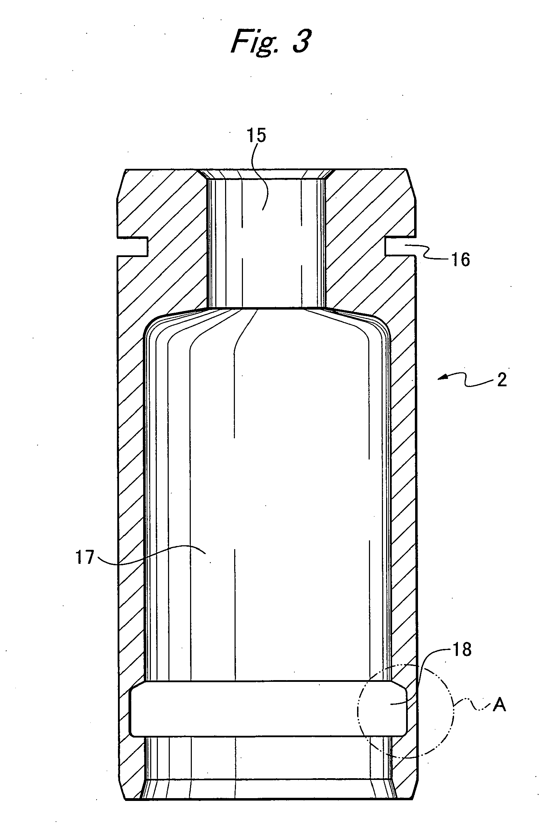

As shown in Fig. 3, a press-in hole 15 into which an air draw 6 is pressed is formed in the upper end part of the plunger 2, and a lock groove 16 is formed in the upper end outer periphery. The tip of a jumping-out preventing plate 11 attached to a spring pin 12 is locked in the lock groove 16, so that the plunger 2 fitted in the cylinder 1a of the housing 1 does not jump out by the spring force of the return spring 4 (see Figs. 1 and 2). Accordingly, in the case where the tensioner is attached to the engine block 5, the plunger 2 does not protrude.

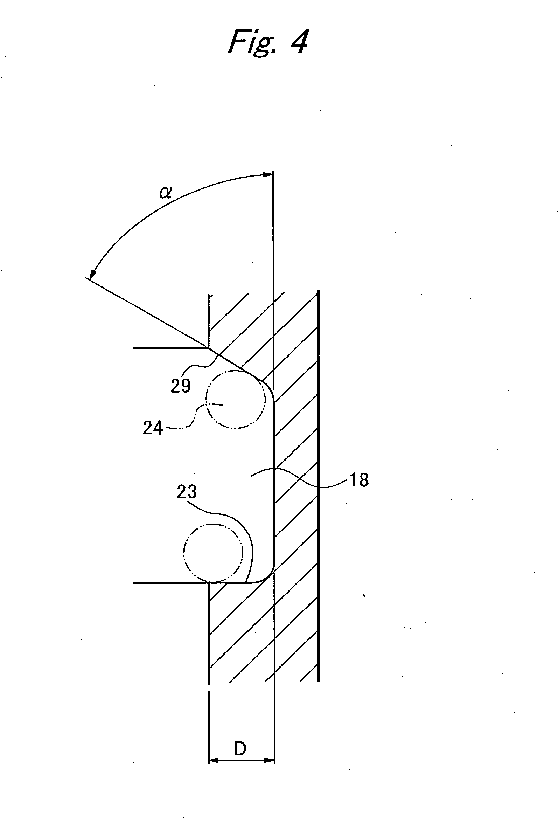

The plunger 2 has therein a space 17 in which the flanged cylindrical body 3 is fitted, and a register ring-containing groove 18 is formed in the inner peripheral lower end part of the space 17. As shown in Fig. 4 in a magnified form, the register ring-containing groove 18 has a specified width, an upper end 29 is inclined upward by an angle α toward a shaft line, and a depth D of the register ring-containing groove 18 is made larger than a wire diameter of a register ring 24 described later.

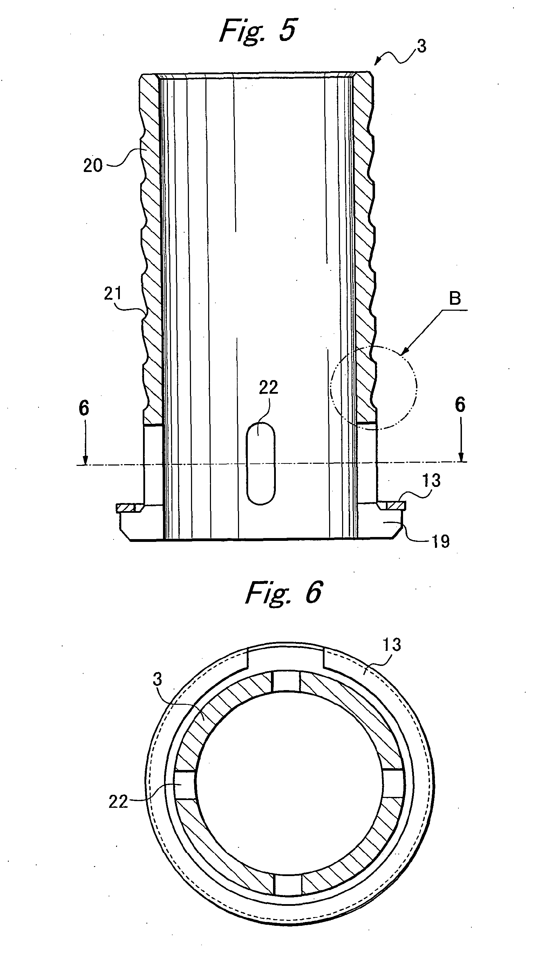

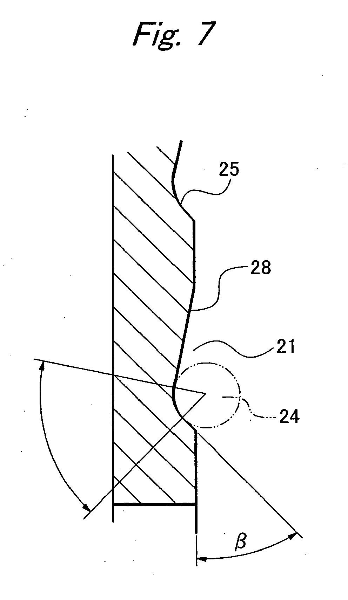

As shown in Figs. 5 and 6, the flanged cylindrical body 3 includes, at its lower end, a flange part 19 slightly smaller than the diameter of the cylinder 1a, and circumferential grooves 21, 21 ··· are formed at a constant pitch on the outer periphery of a tube part 20. Elongated oil holes 22, 22 ··· are formed in the lower end part of the tube part 20, and a retaining ring 13 is disposed at the upper side of the flange 19. As shown in Fig. 7 in a magnified form, the circumferential groove 21 includes an arc-shaped lock groove 25 with which the register ring 24 can come in close contact, and a taper surface 28. The register ring 24 is formed of a piano wire having a spring property and high strength.

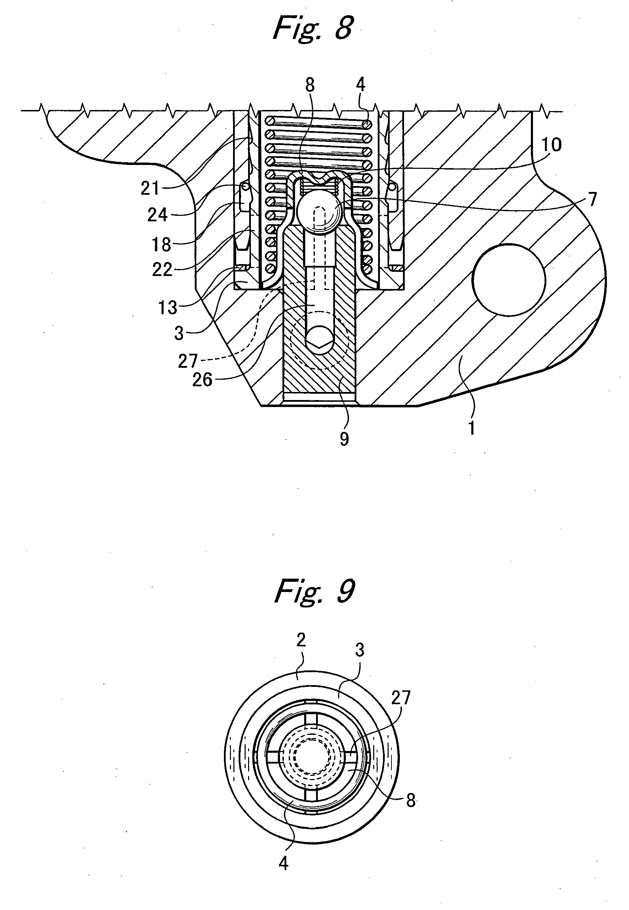

The plunger 2 formed as described above is fitted in the cylinder 1a of the housing 1, and the flanged cylindrical body 3 is fitted in the space 17 in the plunger 2, as shown in Fig. 1. The return spring 4 is contained in the space in the flanged cylindrical body 3 and exerts a spring force to press up the plunger 2. Here, as shown in Figs. 1 and 8, the retaining ring 13 is fitted to the cylinder bottom, so that the flange part 19 of the flanged cylindrical body 3 is fixed and the flanged cylindrical body 3 does not rise from the cylinder bottom. During the operation of the tensioner in which oil pressure exerts, since the pressing force due to oil pressure force exerts on the flange part 19, the flanged cylindrical body 3 does not rise. However, by a slight vibration at the time of an engine start when the oil pressure does not act or at the time of transportation, friction resistance force of the register ring 24 causes the flanged cylindrical body 3 to rise at the time of protrusion of the plunger. The retaining ring 13 to hold the flange part 19 is used to prevent the rising even at such a time. The retaining ring 13 has an outer diameter larger than the cylinder bore of the housing 1, and is fitted by the friction force caused between the cylinder bore and the retaining ring 13 due to the spring force of the retaining ring 13. The rising preventing force is several times larger than the rising force by the register ring 24. Since the rising force is prevented by the friction resistance force of the retaining ring 13, it is not necessary to form a groove in the cylinder bore for the retaining ring, and since the retaining ring 13 of an elastic body is pressed into, assembly can be performed by a smaller force than that at press-fit of a rigid body.

A ball seat 9 is attached to a hole provided in the bottom of the cylinder 1 a of the housing 1, and a check ball 7 is disposed at the upper end of the ball-seat 9 to block an outlet of an oil path 26. The ball seat 9 protruding from the bottom of the cylinder and the check ball 7 are covered with a ball cover 8, and the check ball 7 is pressed to the outlet of the oil path 26 by a ball spring 10.

When the chain is extended and the plunger 2 protrudes, the hydraulic oil flowing through the oil path 26 presses up the check ball 7 and flows into the cylinder from notches 27, 27 ··· formed in the ball cover 8. Part of the hydraulic oil flows through the oil holes 22, 22 ··· formed in the tube part 20 of the flanged cylindrical body 3, infiltrates into a gap between the plunger 2 and the cylinder inner peripheral surface, and a gap between the plunger 2 and the tube part 20, and carries out a lubricating action. On the contrary, when a large load is applied to the plunger 2 and it is pushed back, the check ball 7 closes the oil port 26, and at the same time, the ratchet mechanism operates, so that the retraction of the plunger 2 is prevented.

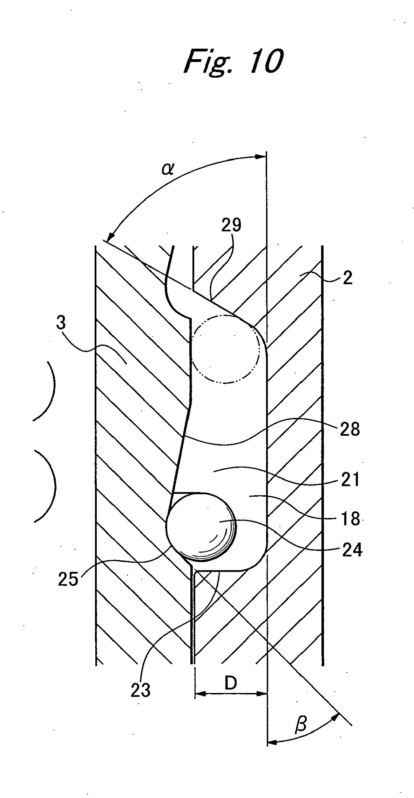

The ratchet mechanism includes the register ring containing groove 18 and the circumferential groove 21 opposite to each other as shown in Fig. 10 and the register ring 24 fitted to the outer periphery of the circumferential groove. The circumferential groove 21 of outer peripheral part of flanged cylindrical body 3 includes the taper surface 28 and the lock groove 25 so that the register ring 24 can slide when the plunger 2 moves in the protruding direction. That is, the taper surface 28 and the arc-shaped lock groove 25 are continuously formed, and when the register ring 24 moves from the lock groove 25 along the taper surface 28, the outer diameter of the register ring 24 becomes large.

The upper end of the register ring-containing groove 18 has an angle α with respect to the shaft center and is formed to be larger than an angle β of the lock groove 25 with respect to the shaft center. In Fig. 10, although the angles are made α = 60° and β = 45°, they may be α > β and α > 45°, and they are changed according to a target value of the stop force at the time of retraction of the plunger. The lower end is perpendicular to the shaft center of the plunger, and at the time of protrusion of the plunger, the register ring 24 is caught by a lower end 23 forming the right-angled surface, the plunger 2 and the register ring 24 are integrated and rise along the taper surface 28 of the circumferential groove 21 of the flanged cylindrical body 3, so that the plunger 2 protrudes.

The depth D of the register ring-containing groove 18 of the inner peripheral part of the plunger has only to be larger than the wire diameter of the register ring 24 when the register ring 24 is positioned on the outer peripheral surface of the flanged cylindrical body 3. The depth of the arc-shaped lock groove 25 formed on the outer peripheral part of the flanged cylindrical body 3 is made to satisfy such a condition that half or more of the wire diameter of the register ring 24 protrudes, and at the time of protrusion of the plunger, the register ring is caught by the register ring containing groove 18 of the plunger 2, and the catching width by which the register ring 24 can be certainly raised is obtained. Besides, a condition is such that the protrusion resistance force by the diameter expansion force of the register ring is smaller than the return spring force to push out the plunger 2.

## Claims

1. An inner ratchet chain tensioner including a housing (1) having a cylinder (1 a), a cylindrical plunger (2) having a bottom and slidable in the cylinder by oil pressure, and a ratchet mechanism to prevent retraction of the plunger, **characterized in that** it further comprises:
a flanged cylindrical body (3) erecting from a bottom of the cylinder and on an outer periphery of which the plunger is slidably fitted; and
a return spring (4) contained in the flanged cylindrical body to urge the plunger in a protruding direction;
wherein the ratchet mechanism includes:
a register ring-containing groove (18) formed on an inner peripheral part of the plunger;
plural circumferential grooves (21) formed at constant intervals on an outer periphery of a tube part of the flanged cylindrical body; and
a register ring (24) fitted between the register ring containing groove and the circumferential groove.

2. The inner ratchet chain tensioner according to claim 1, wherein the register ring-containing groove (18) has a depth larger than a wire diameter of the register ring (24), an upper end (29) of an inclined surface inclined upward toward a center axis, and a lower end (23) of a surface perpendicular to the center axis, and
the circumferential groove (21) of the flanged cylindrical body (3) includes a lock groove (25) having a circular arc surface formed at a lower side, and a taper surface (28) formed of an inclined surface from the circular arc surface to an upper maximum diameter outer peripheral part.

3. The inner ratchet chain tensioner according to claim 1 or 2, wherein a retaining ring (13) to press and fix a flange part (19) of the flanged cylindrical body (3) is fitted to an outer periphery of the bottom of the cylinder (1 a) to prevent rising of the flanged cylindrical body.
